# EUROPÄISCHE PATENTSCHRIFT

(11) **EP 3 784 386 B1**
(45) Veröffentlichungstag und Bekanntmachung des Hinweises auf die Patenterteilung: **31.12.2025**
(21) Anmeldenummer: 19812981.9
(22) Anmeldetag: 28.11.2019
(51) Int. Cl.: B01J 19/32

(54) **FUELLKOERPER**
FILLING BODY
CORPS DE REMPLISSAGE

(30) Priorität: 13.12.2018 DE 102018221652
(43) Veröffentlichungstag der Anmeldung: 03.03.2021
(73) Patentinhaber: SGL Carbon SE, 65201 Wiesbaden (DE)
(72) Erfinder: SPULLER, Ralph, 86405 Meitingen (DE); HALBMEIR, Andreas, 86405 Meitingen (DE); FISCHER, Stefan, 86405 Meitingen (DE)
(86) Internationale Anmeldenummer: PCT/EP2019/082916
(87) Internationale Veröffentlichungsnummer: WO 2020/120151

(56) Entgegenhaltungen:
- EP-A1- 2 380 659
- FR-A1- 2 913 353
- FR-A1- 2 995 224
- JP-A- S63 209 744

## Beschreibung

Die Erfindung betrifft Füllkörper für den Einsatz in unstrukturierten Packungen, aufweisend ein faserverstärktes Kohlenstoffflachmaterial, eine Kolonne aufweisend eine Packung umfassend erfindungsgemäße Füllkörper und ein Verfahren zur Herstellung erfindungsgemäßer Füllkörper.

Füllkörper werden in verschiedensten chemischen und/oder thermischen Verfahren eingesetzt, insbesondere in Packungen von Kolonnen.

In Stofftrennungskolonnen definieren Packungen Trennungszonen, z.B. in Absorptionskolonnen, Desorptionskolonnen, Destillationskolonnen oder Extraktivdestillationskolonnen.

In Reaktionskolonnen werden Füllkörper in verschiedenen Abschnitten von Packungen eingesetzt. Füllkörper werden z.B. in Abschnitten eingesetzt, die Reaktionszonen vor- oder nachgelagert sind und von edukt- oder produkthaltigen Fluiden durchströmt werden. Hier können sie der Zu- oder Abfuhr von Wärme dienen. Füllkörper werden auch innerhalb von Reaktionszonen eingesetzt, wobei die Füllkörper entweder zusammen mit katalytisch aktiven Körpern, z.B. Katalysatorformkörpern, vorliegen und die katalytisch aktiven Körper verdünnen oder selbst als Katalysatorträger dienen, wenn am Füllkörper eine katalytisch aktive Masse angebracht ist.

Aus der EP2380659 A1 sind Füllkörper vom Pallringtyp in Form von Hohlzylindern oder Halbzylindern bekannt, bei denen Abschnitte der Zylinderwand stegartig in Richtung der Zylinderachse eingebogen sind und die vollständig aus einem temperatur- und chemikalienbeständigen Glas, insbesondere Borosilikatglas, hergestellt sind. Sie werden vorzugsweise durch Schneiden und Verformen ausgehend von Glasrohren hergestellt. In der JP S 63209744 ist beschrieben, dass Füllkörper für Kolonnen aus unterschiedlichen Materialien bestehen können, z.B. aus Porzellan, Kunststoffen, Metall oder Kohlenstoff. Genannt werden unter anderem Raschig Ringe, Lessing Ringe und Berl-Sattel.

Die JP S 63209744 schlägt ein Füllmaterial für eine Vorrichtung zur Kontaktierung von Gas mit Flüssigkeit vor, das aus carbonfaserverstärktem Kohlenstoff hergestellt ist. In diesem Zusammenhang werden auch korrugierte Platten, Drahtgestricke, honigwabenförmige und ähnliche Füllmaterialien beschrieben. Die verstärkende Carbonfaser kann unter kontinuierlichen Fasern und Kurzfasern gewählt sein oder als Bogen eingesetzt werden, z.B. als gewebter Stoff, Matte, Filz oder ähnliches.

In der JP S 63209744 werden verschiedene Verfahren zur Herstellung des dort vorgeschlagenen Füllmaterials vorgeschlagen. Wenn die Carbonfaser eine kontinuierliche Faser ist, wird sie zuerst mit einer carbonisierbaren Substanz, wie Phenolharz, Furanharz, Pech oder ähnlichem imprägniert und anschließend um einen Dorn oder ähnliches gewickelt, um sie in die Form eines gewünschten Füllmaterials zu bringen. Wenn die Carbonfaser eine Kurzfaser ist, wird eine Mischung aus Carbonfaser und dem carbonisierbarem Material injiziert, z.B. in die Form eines gewünschten Füllmaterials. Wenn die Carbonfaser in Form eines Bogens vorliegt, z.B. als gewebter Stoff, wird er mit der genannten carbonisierbaren Substanz imprägniert und in eine gerollte Form gebracht oder laminiert, um eine gewünschte Füllungsform zu erhalten. Anschließend soll bei 600 bis 2800 °C carbonisiert werden. Zusätzlich wird eine spanabhebende Bearbeitung vorgeschlagen, um die angestrebte Form zu erhalten. In einem Beispiel wird die Herstellung eines Raschig-Rings ausgehend von einem Prepreg beschrieben.

Die im Stand der Technik beschriebenen, aus carbonfaserverstärktem Kohlenstoff hergestellten Füllmaterialien und Füllkörper sind nur mit großem Aufwand herstellbar.

Der vorliegenden Erfindung liegt die Aufgabe zugrunde einen Füllkörper bereitzustellen, der besonders korrosionsbeständig und mit besonders geringem Aufwand herstellbar ist und den üblichen mechanischen Belastungsanforderung gewachsen ist, also insbesondere dem statisch Druck standhält, der auf die Füllkörper im unteren Bereich einer Packung durch aufliegende Füllkörper und abströmende Flüssigkeit wirkt.

Diese Aufgabe wird gelöst durch Füllkörper für den Einsatz in unstrukturierten Packungen gemäß den Ansprüchen 1 oder 12, wobei der Füllkörper ein faserverstärktes Kohlenstoffflachmaterial aufweist und zwei durch einen Durchschnitt getrennte Bandbereiche des Kohlenstoffflachmaterials in zwei Verbindungsbereichen des Kohlenstoffflachmaterials ineinander übergehen.

Die erfindungsgemäßen Füllkörper eignen sich für den Einsatz in unstrukturierten Packungen, z.B. in unstrukturierten Packungen, die halogenhaltigen Fluiden und halogenwasserstoffhaltigen Fluiden auch in Gegenwart von Wasser bei Temperaturen von mehr als 50 °C (dauerhaft) standhalten. Unstrukturierte Packungen finden sich z.B. in Apparaten der chemischen Verfahrenstechnik, insbesondere in Kolonnen, wie in Absorptionskolonnen, Desorptionskolonnen, Destillationskolonnen oder Extraktivdestillationskolonnen.

Die erfindungsgemäßen Füllkörper weisen ein faserverstärktes Kohlenstoffflachmaterial auf. Faserverstärkte Kohlenstoffflachmaterialien sind dem mit kohlenstoffbasierten Materialien vertrauten Fachmann bekannt, z.B. aus dem Buch "Carbonfasern und ihre Verbundwerkstoffe, Herstellungsprozesse, Anwendungen und Marktentwicklung" von Hubert Jäger und Tilo Hauke (Verlag Moderne Industrie, 2010, ISBN 978-3-86236-001-7). Das faserverstärkte Kohlenstoffflachmaterial kann aus einem Prepreg gebildet sein, durch Aushärten und Carbonisieren. Ein Prepreg ist ein mit einem Matrixpolymer (z.B. Harz) imprägniertes, aber noch nicht ausgehärtetes Faserband, z.B. Carbonfaserband oder ein zweidimensionales technisches Textil.

Unter einem Durchschnitt ist im Zusammenhang mit der vorliegenden Erfindung ein durch das Kohlenstoffflachmaterial von einer zur anderen Hauptoberfläche hindurchreichender Schnitt gemeint, wobei beide Enden des Durchschnitts vom umlaufenden Rand des Kohlenstoffflachmaterials abgesetzt sind. Es handelt sich bei dem Durchschnitt also nicht um einen von einem Rand des Kohlenstoffflachmaterials ausgehenden Einschnitt und auch nicht um einen, das Kohlenstoffflachmaterial in zwei Teile durchtrennenden Schnitt.

Der Durchschnitt definiert zwei Bandbereiche, die durch den Durchschnitt getrennt sind. Die Bandbereiche grenzen an den Durchschnitt an.

Die beiden Bandbereiche des Kohlenstoffflachmaterials gehen in zwei Verbindungsbereichen des Kohlenstoffflachmaterials ineinander über. Die Verbindungsbereiche verbinden die Bandbereiche, da die beiden Enden des Durchschnitts von den Rändern des Kohlenstoffflachmaterials abgesetzt sind.

Vorzugsweise sind die Verbindungsbereiche räumlich getrennte Bereiche des Kohlenstoffflachmaterials, die über die Bandbereiche verbunden sind.

In dem erfindungsgemäßen Füllkörper nach Anspruch 12 kann es sich bei den Fasern um Kurzfasern, z.B. Carbonfaser-Kurzfasern, handeln. Kurzfaser bedeutet im Zusammenhang mit der vorliegenden Erfindung, dass die Faser kürzer als der kürzeste Bandbereich ist. Die Länge des Bandbereichs ist entlang des kürzesten Durchschnitts gemessen.

In den erfindungsgemäßen Füllkörpern nach den Ansprüchen 1 oder 12 kann es sich um kontinuierliche Fasern, z.B. kontinuierliche Carbonfasern, handeln. Die kontinuierlichen Fasern erstrecken sich z.B. von einer Stelle des umlaufenden Randes bis zu einer anderen Stelle des umlaufenden Randes des Kohlenstoffflachmaterials.

Die Fasern, z.B. Carbonfasern, können unregelmäßig oder regelmäßig angeordnet sein. Unregelmäßig angeordnete Fasern liegen z.B. in einem Vlies vor. Die erfindungsgemäße Faserverstärkung kann z.B. durch vliesförmig vorliegende Fasern bewirkt sein.

Gemäß der erfindungsgemäßen Lösung nach Anspruch 1 und vorzugsweise bei der erfindungsgemäßen Lösung nach Anspruch 12 erstreckt sich wenigstens ein Teil der in wenigstens einem Bandbereich verlaufenden Fasern bis in beide Verbindungsbereiche hinein. Dadurch erhöht sich die Stabilität der erfindungsgemäßen Füllkörper, insbesondere führen Zugbelastungen dann noch seltener zu einem Ein- oder Abreißen von Bandbereichen. Letztlich können größere Packungshöhen erzielt werden, ohne dass in unteren Bereichen der Packung nennenswerte Schäden an Füllkörpern entstehen.

Die Zahl der Durchschnitte kann beliebig gewählt werden. Es empfiehlt sich jedoch, die Zahl der Bandbereiche nicht beliebig zu erhöhen und eine ausreichende Breite der Bandbereiche sicherzustellen, um den Anforderungen an die in Packungen entstehenden mechanischen Belastungen standhalten zu können.

Die Füllkörper können z.B. 1 bis 35 Durchschnitte aufweisen, insbesondere 2 bis 23 Durchschnitte, bevorzugt 2 bis 15 Durchschnitte, besonders bevorzugt 2 bis 11 Durchschnitte. Ein besonders bevorzugter erfindungsgemäßer Füllkörper weist 3 bis 7, z.B. 3, 4 oder 5 Durchschnitte auf.

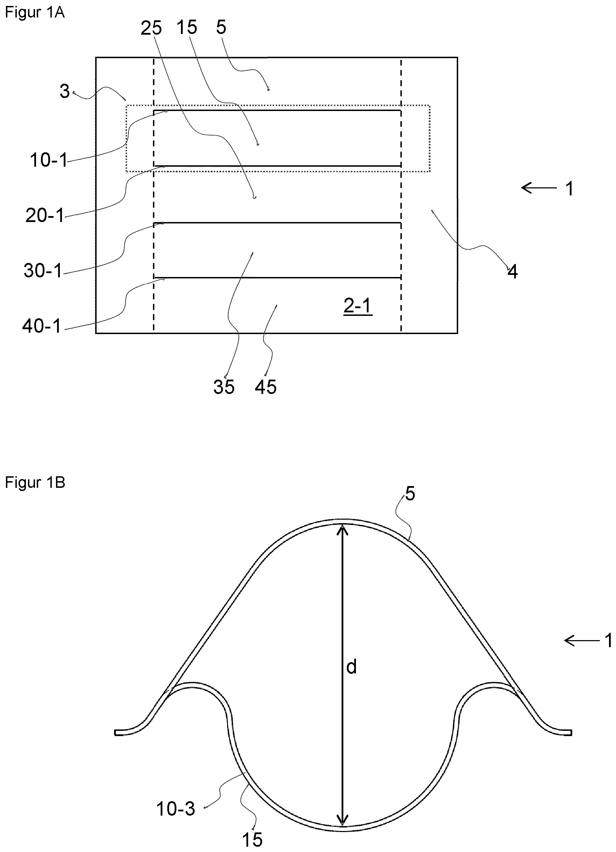

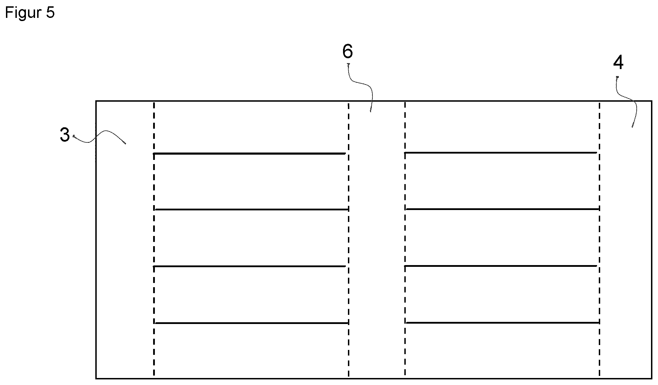

Es ist bevorzugt, dass sämtliche, durch die Durchschnitte getrennten Bandbereiche des Kohlenstoffflachmaterials in nur zwei Verbindungsbereichen des Kohlenstoffflachmaterials ineinander übergehen (wie z.B. bei dem in Fig. 1A bis 1C gezeigten Füllkörper, der nur die mit den Bezugszeichen 3 und 4 versehenen Verbindungsbereiche aufweist). Es ist jedoch auch möglich, dass mehr als zwei Verbindungsbereiche vorliegen (wie z.B. bei dem in Fig. 5 gezeigten Füllkörper). Ein besonders bevorzugter Füllkörper weist
- n: Durchschnitte und
- n+1: Bandbereiche,
auf, wobei n eine unter 2, 3, 4, 5, 6, 7, 8, 9, 10 oder 11, vorzugsweise eine unter 3, 4 oder 5 ausgewählte Zahl, wie z.B. 4 ist.

Bei bevorzugten erfindungsgemäßen Füllkörpern definiert der Durchschnitt eine erste Schnittkante und eine zweite Schnittkante, die an einem ersten und einem zweiten Schnittende des Durchschnitts ineinander übergehen. Ein Abschnitt einer Schnittkante ist zur anderen Schnittkante desselben Durchschnitts beabstandet. Man kann diesen Abstand gezielt und wie gewünscht einstellen, indem man die Pressschneidewerkzeuge, die man bei der Herstellung verwendet, entsprechend auslegt. Je weiter die Pressschneidewerkzeuge ineinandergreifen, desto größer wird der Abstand. Vorzugsweise beträgt der Abstand, den ein Punkt einer Schnittkante zum korrespondierenden Punkt der anderen Schnittkante einnimmt, mindestens 1/8, vorzugweise mindestens 1/6 der Schnittkantenlänge. Korrespondierende Punkt beider Schnittkanten sind dabei die Punkte des Flachmaterials, die vor dem Einbringen des Durchschnitts und der Formgebung im Pressschneidewerkzeug unmittelbar aneinander angrenzten. Die Schnittkantenlänge ist die Länge von einer der beiden gleich langen Schnittkanten.

Wenn der Füllkörper mindestens zwei Durchschnitte aufweist, können zwei Schnittkanten benachbarter Durchschnitte den Bandbereich begrenzen und die den Bandbereich begrenzenden Schnittkanten verlaufen parallel zueinander. Der Bandbereich ist dann überall gleich breit. Mit "parallel zueinander" verlaufenden Schnittkanten ist nicht gemeint, dass die Schnittkanten insgesamt gerade sind, sondern dass der Verlauf beider Schnittkanten in jedem Punkt der jeweiligen Schnittkante durch eine Geraden angenähert werden kann, in dem die jeweilige Gerade die Schnittkante tangiert. Einander entsprechende Geraden beider Schnittkanten verlaufen dann jeweils parallel zueinander.

Vorzugsweise verlaufen die beiden anderen Schnittkanten der benachbarten Durchschnitte ebenfalls parallel zueinander.

Die beiden Schnittkanten eines Durchschnitts verlaufen vorzugsweise nicht parallel zueinander.

Es ist außerdem bevorzugt, wenn die beiden Schnittkanten desselben Durchschnitts in einer durch Parallelverschiebung einer Kurve erhältlichen Fläche liegen. Vorzugsweise liegend die beiden Schnittkanten desselben Durchschnitts in einer Ebene.

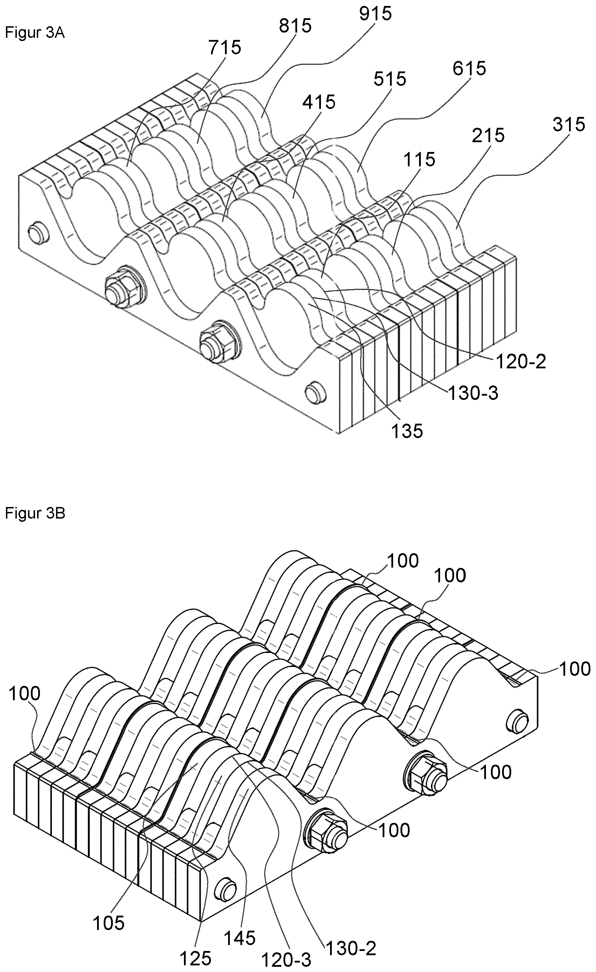

Erfindungsgemäße Füllkörper mit parallel verlaufenden Schnittkanten und/oder bei denen die beiden Schnittkanten desselben Durchschnitts in einer Ebene liegen, sind besonders kostengünstig herstellbar, denn die Pressschneidewerkzeuge können dann konventionelle, verspannte Metallplatten einheitlicher Dicke aufweisen. Figuren 3A und 3B zeigen Pressschneidewerkzeuge, bei denen solche Metallplatten mit Gewindestangen verspannt sind. Da die aneinander entlanggleitenden Durschneidekanten beider Pressschneidewerkzeuge Kanten ebener Metallplatten sind, liegen die beiden Schnittkanten eines darin entstehenden Durchschnitts zwingend in einer Ebene. Vorzugsweise liegen sämtliche Schnittkanten aller Durchschnitte des Füllkörpers in zueinander parallelen Ebenen.

Das faserverstärkte Kohlenstoffflachmaterial (2) kann z.B. unter Glasfasern, Basaltfasern und Carbonfasern, vorzugsweise unter Carbonfasern ausgewählte Fasern aufweisen. Besonders bevorzugte erfindungsgemäße faserverstärkte Kohlenstoffflachmaterialien sind carbonfaserverstärkte Kohlenstoffflachmaterialien.

Das faserverstärkte Kohlenstoffflachmaterial kann mindestens einen unidirektionalen Bereich umfassen, in dem die Fasern sich nicht kreuzen. Es kann mindestens zwei unidirektionale Bandbereiche umfassen, die an beide Schnittkanten desselben Durchschnitts angrenzen. Vorzugsweise verlaufen die Fasern in den an die beiden Schnittkanten des Durchschnitts angrenzenden Bereichen je parallel zur Schnittkante. Bei einem solchen Füllkörper kann der Durchschnitt gebildet werden im Wesentlichen ohne Fasern zu durchschneiden. Der Durchschnitt verläuft dann zwischen den Fasern. Dies bewirkt besonders wenig Verschleiß an den Pressschneidewerkzeugen, da diese im Wesentlichen nur Matrixmaterial durchschneiden. Der Füllkörper ist also noch effektiver herstellbar.

Ein unidirektionaler Bandbereich kann sich von der einen Schnittkante des Bandbereichs zur anderen Schnittkante desselben Bandbereichs und von den ersten Schnittenden der beiden an den Bandbereich angrenzenden Durchschnitte bis zu den zweiten Schnittenden der beiden an den Bandbereich angrenzenden Durchschnitte erstrecken.

Der unidirektionale Bereich erstreckt sich vorzugsweise über das gesamte Kohlenstoffflachmaterial.

Alternativ oder zusätzlich zu einem oder mehreren unidirektionalen Bereichen, nach der erfindungsgemäßen Lösung des Anspruchs 12 aber zwingend, umfasst das faserverstärkte Kohlenstoffflachmaterial mindestens einen multidirektionalen Bereich, in dem die Fasern sich kreuzen. In diesem Bereich kann das faserverstärkte Kohlenstoffflachmaterial ein multidirektionales Fasergelege, ein Fasergewebe oder ein Faservlies umfassen. Beispielsweise können Verbindungsbereiche multidirektionale Bereiche umfassen. Dies hat den Vorteil, dass die Verbindungsbereiche noch stabiler sind und die Füllkörper noch höheren mechanischen Belastungen standhalten. Dennoch ist es dann möglich, die Durchschnitte auszubilden, ohne Fasern durchtrennen zu müssen.

Die Erfindung betrifft auch eine Kolonne aufweisend eine unstrukturierte Packung umfassend erfindungsgemäße Füllkörper. Die Kolonne weist die unstrukturierte Packung auf. Mit unstrukturiert ist gemeint, dass die Füllkörper in der Packung zufällig ausgerichtet sind, so wie es sich z.B. beim Schütten der Füllkörper in die Kolonne oder in Bereiche der Kolonne zufällig ergibt. Die Packung umfasst erfindungsgemäße Füllkörper. Sie können im Gemisch mit anderen Füllkörper oder katalytisch aktiven Körpern (z.B. Katalysatorformkörpern oder mit katalytisch aktiver Masse beschichteten Trägerformkörper) vorliegen. Die Packung kann auch in bestimmten Abschnitten oder über die gesamte Packung hinweg nur aus erfindungsgemäßen Füllkörpern bestehen.

Die Erfindung betrifft auch ein Verfahren zur Herstellung eines erfindungsgemäßen Füllkörpers, wobei ein faserverstärktes Ausgangsflachmaterial in eine Pressschneidezone geführt wird, und das Ausgangsflachmaterial in der Pressschneidezone so geformt, zugeschnitten und durchschnitten wird, dass ein Körper gebildet wird, der ein faserverstärktes Flachmaterial aufweist und bei dem zwei durch einen Durchschnitt getrennte Bandbereiche des Flachmaterials in zwei Verbindungsbereichen des Flachmaterials ineinander übergehen.

Bei einer Variante des erfindungsgemäßen Verfahrens ist das faserverstärkte Ausgangsflachmaterial schon ganz oder teilweise carbonisiert. Das faserverstärkte Ausgangsflachmaterial kann also ein faserverstärktes Kohlenstoffflachmaterial sein, z.B. ein carbonfaserverstärktes Kohlenstoffflachmaterial.

Bei einer anderen Variante des erfindungsgemäßen Verfahrens liegen im faserverstärkten Ausgangsflachmaterial nicht carbonisierte Matrixbestandteile und/oder nicht carbonisierte Faserbestandteile vor. Nicht carbonisierte Matrixbestandteile können ein Harz, das ungehärtet, teilweise gehärtet oder vollständig gehärtet vorliegen kann, einen Thermoplast, Pech oder deren Mischungen umfassen. Nicht carbonisierte Faserbestandteile können polymerbasierte Fasern, wie insbesondere Aramid-, Zellulose- und/oder Kunststofffasern umfassen. Geeignete, carbonisierbare Ausgangsfasern und carbonisierbare Matrixsubstanzen sind beschrieben in "Carbonfasern und ihre Verbundwerkstoffe, Herstellungsprozesse, Anwendungen und Marktentwicklung" von Hubert Jäger und Tilo Hauke (Verlag Moderne Industrie, 2010, ISBN 978-3-86236-001-7). Bei dieser Verfahrensvariante wird der in der Pressschneidezone gebildete Körper einer Carbonisierung zugeführt, in der der Körper zum erfindungsgemäßen Füllkörper umgesetzt wird. Die Carbonisierung erfolgt vorzugsweise unter Sauerstoffausschluss und bei erhöhten Temperaturen, die z.B. im Bereich von 300 bis 3000 °C liegen können. Der Fachmann wählt die Temperatur je nachdem, welche Matrix- und/oder Fasersubstanz carbonisiert werden soll und je nach angestrebten Eigenschaften des Füllkörpers.

Die Erfindung betrifft auch die Verwendung von erfindungsgemäßen Füllkörpern oder einer erfindungsgemäßen Kolonne zur Aufarbeitung von sauergashaltigen Fluiden, wie z.B. von halogenwasserstoffhaltigen Fluiden und/oder halogenhaltigen Fluiden, wie z.B. chlorgashaltigen Fluiden.

Die Erfindung wird durch die nachfolgenden Figuren und Ausführungsbeispiel veranschaulicht, ohne darauf beschränkt zu sein.
Figuren 1A, 1B und 1C zeigen einen erfindungsgemäßen Füllkörper mit zwei Verbindungsbereichen in unterschiedlichen Perspektiven.
Figur 2 zeigt einen vergrößerten Ausschnitt des erfindungsgemäßen Füllkörpers, der in Figur 1A durch ein Rechteck angedeutet ist.
Figuren 3A und 3B zeigen ineinandergreifende Pressschneidewerkzeuge zur Herstellung des in Figuren 1A, 1B, 1C und 2 gezeigten Füllkörpers.
Figur 4 zeigt die übereinander angeordneten Pressschneidewerkzeuge der Figuren 3A und 3B mit durchschnittenem und zu Füllkörpergrünlingen zugeschnittenem, faserverstärktem Flachmaterial.
Figur 5 zeigt einen erfindungsgemäßen Füllkörper mit drei Verbindungsbereichen

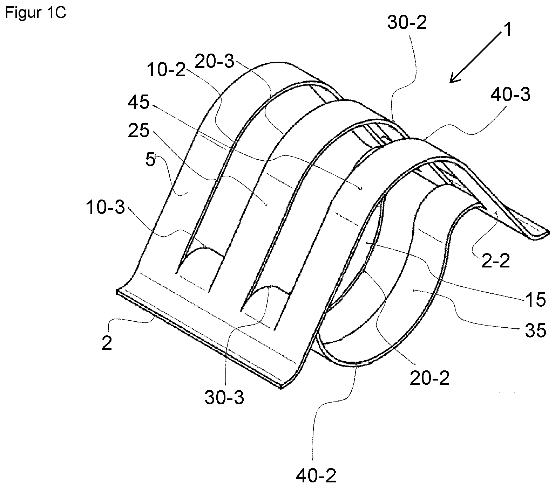

In Figuren 1A, 1B und 1C ist ein Füllkörper **1** für eine Kolonne gezeigt. Der Füllkörper weist ein faserverstärktes Kohlenstoffflachmaterial **2** auf. Zwei durch einen Durchschnitt **10-1** getrennte Bandbereiche **5, 15** des Kohlenstoffflachmaterials **2** gehen in zwei Verbindungsbereichen **3, 4** des Kohlenstoffflachmaterials ineinander über. In Figur 1A ist der Übergang von den Bandbereichen zu den Verbindungsbereichen durch gestrichelte Linien angedeutet. Bei dem in den Figuren dargestellten Ausführungsbeispiel liegen insgesamt vier Durchschnitte **10-1, 20-1, 30-1, 40-1** vor, die parallel verlaufen. Somit liegen insgesamt fünf getrennte Bandbereiche **5, 15, 25, 35, 45** vor (n Durchschnitte und n+1 Bandbereiche, wobei n 4 beträgt).

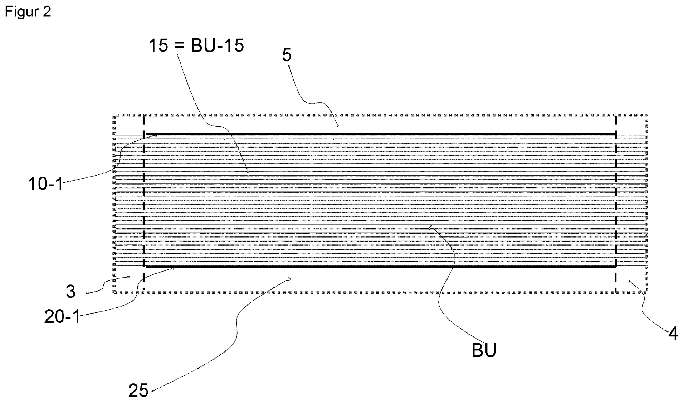

Ein Teil der in jedem Bandbereich **5, 15, 25, 35, 45** verlaufenden Fasern (vorzugsweise Carbonfasern) erstreckt sich bis in beide Verbindungsbereiche **3, 4** hinein. Dies ist in Figur 2 beispielhaft gezeigt für einen dort vergrößert dargestellten Ausschnitt aus Figur 1A um Bandbereich **15.** Die sich im Bandbereich 15 von Verbindungsbereich **3** bis in Verbindungsbereich **4** hinein erstreckenden Fasern sind in Figur 2 als dünne Geraden angedeutet. Bei Betrachtung des Füllkörpers **1** von außen sind die Fasern nicht oder nicht in ihrer vollen Länge zu sehen, da sie wenigstens teilweise in der Kohlenstoffmatrix das Kohlenstoffflachmaterials liegen. Figur 2 deutet den Faserverlauf innerhalb der Matrix an.

Die in Figur 1A gezeigten Durchschnitte **10-1, 20-1, 30-1, 40-1** definieren je eine in Figur 1B gezeigte erste Schnittkante **10-2, 20-2, 30-2, 40-2** und eine in Figur 1B gezeigte zweite Schnittkante **10-3, 20-3, 30-3, 40-3.** An den beiden Schnittenden der Durchschnitte **10-1, 20-1, 30-1, 40-1** gehen die beiden Schnittkanten jedes Durchschnitts ineinander über, was in den drei Perspektiven der Figuren 1A, 1B und 1C sehr gut zu sehen ist. In der Perspektive der Figur 1B verdeckt Bandbereich **5** die beiden Bandbereiche **25, 45** und Bandbereich **15** verdeckt den Bandbereich **35.** Ebenso verdeckt Bandbereich **5** die Schnittkante **10-2**, wobei ein Doppelpfeil **d** in Figur 1B andeutet, dass ein Abschnitt dieser Schnittkante **10-2** zur anderen Schnittkante **10-3** desselben Durchschnitts **10-1** beabstandet ist.

Bei dem in Figuren 1A bis 1C gezeigten, erfindungsgemäßen Füllkörper begrenzen je zwei Schnittkanten (**10-3** und **20-2; 20-3** und **30-2; 30-3** und **40-2**) benachbarter Durchschnitte **(10-1** und **20-1; 20-1** und **30-1; 20-1** und **30-1**) einen Bandbereich (**15, 25, 35**). Die den jeweiligen Bandbereich (**15, 25, 35**) begrenzenden Schnittkanten (**10-3** und **20-2; 20-3** und **30-2; 30-3** und **40-2**) verlaufen je paarweise parallel zueinander.

Auch die beiden anderen Schnittkanten (**10-2** und **20-3; 20-2** und **30-3; 30-2** und **40-3**) der benachbarten Durchschnitte (**10-1** und **20-1; 20-1** und **30-1; 20-1** und **30-1**) verlaufen je paarweise parallel zueinander.

Aus der Perspektive der Figur 1A ist leicht zu erkennen, dass je die beiden Schnittkanten (**10-2** und **10-3; 20-2** und **20-3; 30-2** und **30-3; 40-2** und **40-3**) desselben Durchschnitts (**10-1; 20-1; 30-1; 40-1**) in einer Ebene liegen. Die Ebenen verlaufen hier auf den Betrachter zu. Somit erscheinen die in den Ebenen liegenden Schnittkanten jeweils als ein Geradenabschnitt, der mit dem zugehörigen Durchschnitt zusammenfällt.

In dem in Figur 2 durch Geraden angedeuteten Bereich kreuzen sich die Carbonfasern nicht. Dieser Bereich ist also ein unidirektionaler Bereich **BU** des faserverstärkten Kohlenstoffflachmaterials **2.** In den Figuren ist nicht dargestellt, dass die in den anderen Bandbereichen eingebetteten Fasern ebenfalls parallel und bis in die Verbindungsbereiche **3** und **4** hinein verlaufen. Das faserverstärkte Kohlenstoffflachmaterial **2** umfasst also mehrere paare unidirektionaler Bandbereiche (**BU-5** und **BU-15; BU-15** und **BU-25; BU-25** und **BU-35; BU-35** und **BU-45**), die je an die beiden Schnittkanten (**10-2** und **10-3; 20-2** und **20-3; 30-2** und **30-3; 40-2** und **40-3**) desselben Durchschnitts **(10-1; 20-1; 30-1; 40-1)** angrenzen.

Aus Figuren 1A und 2 erschließt sich, dass der unidirektionale Bandbereich **BU-15** die gesamte Fläche das Bandbereichs **15** einnimmt. Der unidirektionale Bandbereich **BU**-15 erstreckt sich von der einen Schnittkante **10-3** des Bandbereichs **15** zur anderen Schnittkante **20-2** desselben Bandbereichs **15** und von den ersten Schnittenden der beiden Durchschnitte **10-1, 20-1** bis zu den zweiten Schnittenden der beiden Durchschnitte **10-1, 20-1.** Beispielsweise kann der unidirektionale Bereich **BU** sich über das gesamte Kohlenstoffflachmaterial erstrecken.

In den Figuren nicht dargestellt ist, dass das faserverstärkte Kohlenstoffflachmaterial 2 mindestens einen multidirektionalen Bereich umfassen kann, gemäß der erfindungsgemäßen Lösung nach Anspruch 12 umfassen muss, in dem die Fasern sich kreuzen.

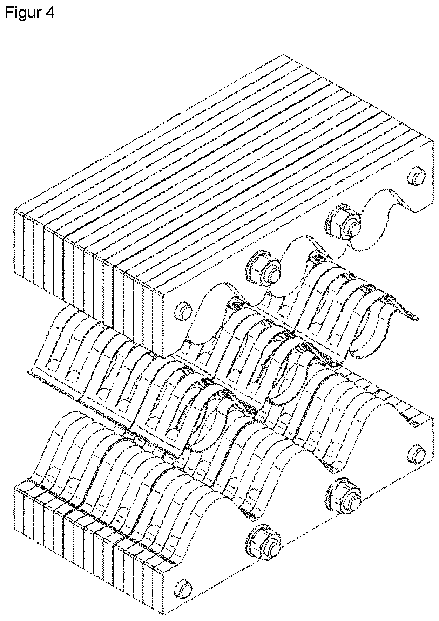

Die in Figuren 3A und 3B gezeigten Pressschneidewerkzeuge können in einem erfindungsgemäßen Verfahren zur Herstellung des gezeigten Füllkörpers eingesetzt werden. Gemäß dem Verfahren werden ein Fasern und eine carbonisierbare Matrixsubstanz aufweisendes Ausgangsflachmaterial in eine Pressschneidezone geführt. In der Pressschneidezone bildet das in Figur 3A gezeigte Pressschneidewerkzeug ein oberes Gegenstück zu dem in Figur 3B gezeigten unteren Pressschneidewerkzeug; wie in Figur 4 gezeigt. In der Pressschneidezone wird das zwischen den Werkzeugen der Figuren 3A und 3B liegende Ausgangsflachmaterial durchschnitten und zugeschnitten und somit in Füllkörpergrünlinge überführt. Die Füllkörpergrünlinge lassen sich durch Carbonisierung in erfindungsgemäße Füllkörper überführen.

Die hier beispielhaft gezeigten Pressschneidewerkzeuge umfassen je 9 (3 x 3) Teilbereiche, an deren Übergängen am unteren Pressschneidewerkzeug Zuschneidekanten 100 verlaufen. Die Zuschneidekanten 100 durchtrennen das faserverstärkte Flachmaterial in Längs- und Querrichtung so, dass 9 zugeschnittene Füllkörpergrünlinge mit gewünschtem Zuschnitt erhalten werden.

Jeder der 9 Teilbereiche umfasst plattenartige, parallel verlaufende Schneidevorsprünge und dazwischen angeordnete, parallel verlaufende Schneidevorsprungaufnahmen, welche die Schneidevorsprünge des anderen Pressschneidewerkzeugs beim Pressschneidevorgang aufnehmen. Auf den Oberflächen (siehe z.B. **105, 125** und **145** im ersten Teilbereich der Figur 3B sowie **115** und **135** im ersten Teilbereich der Figur 3A) der Schneidevorsprünge kommen die Bandbereiche **5, 15, 25, 35, 45** zum Liegen. Die Durchschnitte **10-1, 20-1, 30-1, 40-1** entstehen je dadurch, dass die plattenartigen Schneidevorsprünge in die Schneidevorsprungaufnahmen des anderen Schneidewerkzeugs vordringen. Dabei gleiten je zwei Durchschneidekanten (z.B. **120-2** und **120-3** sowie **130-2** und **130-3**) aneinander entlang und erzwingen dadurch die Ausbildung der korrespondierenden Durchschnitte (Durchschnitte **20-1** und **30-1** für die hier genannten und in Figuren 3A und 3B mit Bezugszeichen versehenen Durchschneidekanten **120-2, 120-3, 130-2, 130-3**).

Es ist auch möglich, Pressschneidewerkzeuge zu verwenden, die nicht 3 x 3 Teilbereiche, sondern größere oder kleinere Zahlen von Teilbereichen umfassen, z.B. nur einen Teilbereich.

Figur 5 zeigt einen erfindungsgemäßen Füllkörper mit 3 Verbindungsbereichen **3, 4** und **6.** Es ist nur die Perspektive der Figur 1 A gezeigt.

Aus Gründen der Anschaulichkeit sind in den Figuren nur ausgewählte Bezugszeichen dargestellt.

**Bezugszeichenliste**

| | |
|---|---|
| Füllkörper | **1** |
| Kohlenstoffflachmaterial | **2** |
| Erste Hauptoberfläche | **2-1** |
| Zweite Hauptoberfläche | **2-2** |
| Verbindungsbereich | **3, 4, 6** |
| Bandbereich | **5, 15, 25, 35, 45** |
| Durchschnitt | **10-1, 20-1, 30-1, 40-1** |
| erste Schnittkante | **10-2, 20-2, 30-2, 40-2** |
| zweite Schnittkante | **10-3, 20-3, 30-3, 40-3** |
| unidirektionaler Bereich | **BU** |
| unidirektionaler Bandbereich | **BU-5, BU-15** |
| Zuschneidekante | **100** |
| Durchschneidekante | **120-2, 120-3, 130-2, 130-3** |
| Oberflächen | **105, 115, 125, 135, 145** |

## Patentansprüche

1. Füllkörper (1) für den Einsatz in unstrukturierten Packungen, wobei der Füllkörper ein faserverstärktes Kohlenstoffflachmaterial (2) aufweist und zwei durch einen Durchschnitt (10-1) getrennte Bandbereiche (5, 15) des Kohlenstoffflachmaterials in zwei Verbindungsbereichen (3, 4) des Kohlenstoffflachmaterials ineinander übergehen, **dadurch gekennzeichnet, dass** wenigstens ein Teil der in wenigstens einem Bandbereich (5, 15) verlaufenden Fasern sich bis in beide Verbindungsbereiche (3, 4) hinein erstrecken.

2. Füllkörper (1) nach Anspruch 1, aufweisend
n Durchschnitte und
n+1 Bandbereiche,
wobei n eine unter 2, 3, 4, 5, 6, 7, 8, 9, 10 oder 11 ausgewählte Zahl ist.

3. Füllkörper (1) nach Anspruch 1, wobei der Durchschnitt (10-1) eine erste Schnittkante (10-2) und eine zweite Schnittkante (10-3) definiert, die an einem ersten und einem zweiten Schnittende des Durchschnitts (10-1) ineinander übergehen und ein Abschnitt einer Schnittkante (10-2) zur anderen Schnittkante (10-3) desselben Durchschnitts (10-1) beabstandet ist.

4. Füllkörper (1) nach Anspruch 1, wobei zwei Schnittkanten (10-3, 20-2) benachbarter Durchschnitte (10-1, 20-1) den Bandbereich (15) begrenzen und die den Bandbereich (15) begrenzenden Schnittkanten (10-3, 20-2) parallel zueinander verlaufen.

5. Füllkörper (1) nach Anspruch 4, wobei die beiden anderen Schnittkanten (10-2, 20-3) der benachbarten Durchschnitte (10-1, 20-2) ebenfalls parallel zueinander verlaufen.

6. Füllkörper (1) nach Anspruch 1, wobei beide Schnittkanten (10-2, 10-3) desselben Durchschnitts (10-1) in einer Ebene liegen.

7. Füllkörper (1) nach Anspruch 1, wobei das faserverstärkte Kohlenstoffflachmaterial (2) unter Glasfasern, Basaltfasern und Carbonfasern ausgewählte Fasern aufweist.

8. Füllkörper (1) nach Anspruch 1, wobei das faserverstärkte Kohlenstoffflachmaterial (2) mindestens einen unidirektionalen Bereich (BU) umfasst, in dem die Fasern sich nicht kreuzen.

9. Füllkörper (1) nach Anspruch 8, wobei das faserverstärkte Kohlenstoffflachmaterial (2) mindestens zwei unidirektionale Bandbereiche (BU-5, BU-15) umfasst, die an beide Schnittkanten (10-2, 10-3) desselben Durchschnitts (10-1) angrenzen.

10. Füllkörper (1) nach Anspruch 8, wobei ein unidirektionaler Bandbereich (BU-15) sich von der einen Schnittkante (10-3) des Bandbereichs (15) zur anderen Schnittkante (20-2) desselben Bandbereichs (15) und von den ersten Schnittenden der beiden Durchschnitte (10-1, 20-1) bis zu den zweiten Schnittenden der beiden Durchschnitte (10-1, 20-1) erstreckt.

11. Füllkörper nach Anspruch 8, wobei der unidirektionale Bereich (BU) sich über das gesamte Kohlenstoffflachmaterial (2) erstreckt.

12. Füllkörper (1) für den Einsatz in unstrukturierten Packungen, wobei der Füllkörper ein faserverstärktes Kohlenstoffflachmaterial (2) aufweist und zwei durch einen Durchschnitt (10-1) getrennte Bandbereiche (5, 15) des Kohlenstoffflachmaterials in zwei Verbindungsbereichen (3, 4) des Kohlenstoffflachmaterials ineinander übergehen, **dadurch gekennzeichnet, dass** das faserverstärkte Kohlenstoffflachmaterial (2) mindestens einen multidirektionalen Bereich (BM) umfasst, in dem die Fasern sich kreuzen.

13. Kolonne aufweisend eine unstrukturierte Packung umfassend Füllkörper nach einem der Ansprüche 1 bis 12.

14. Verfahren zur Herstellung eines Füllkörpers nach einem der Ansprüche 1 bis 12, wobei ein faserverstärktes Ausgangsflachmaterial in eine Pressschneidezone geführt wird, und das Ausgangsflachmaterial in der Pressschneidezone so geformt, zugeschnitten und durchschnitten wird, dass ein Körper gebildet wird, der ein faserverstärktes Flachmaterial aufweist und bei dem zwei durch einen Durchschnitt getrennte Bandbereiche des Flachmaterials in zwei Verbindungsbereichen des Flachmaterials ineinander übergehen.

15. Verwendung von Füllkörpern nach Ansprüchen 1 bis 12 oder einer Kolonne nach Anspruch 13 zur Aufarbeitung von sauergashaltigen und/oder halogenhaltigen Fluiden.

## Claims

1. Filling body (1) for use in unstructured packings, wherein the filling body has a fibre-reinforced carbon flat material (2), and two strip regions (5, 15) of the carbon flat material, which are separated by a cut (10-1), transition into one another in two connecting regions (3, 4) of the carbon flat material, **characterized in that** at least some of the fibres running in at least one strip region (5, 15) extend into both connecting regions (3, 4).

2. Filling body (1) according to claim 1, comprising
n cuts and
n+1 strip regions,
wherein n is a number selected from 2, 3, 4, 5, 6, 7, 8, 9, 10 or 11.

3. Filling body (1) according to claim 1, wherein the cut (10-1) defines a first cut edge (10-2) and a second cut edge (10-3), which transition into one another at a first and a second cut end of the cut (10-1), and a portion of one cut edge (10-2) is spaced apart from the other cut edge (10-3) of the same cut (10-1).

4. Filling body (1) according to claim 1, wherein two cut edges (10-3, 20-2) of adjacent cuts (10-1, 20-1) delimit the strip region (15), and the cut edges (10-3, 20-2) delimiting the strip region (15) run parallel to one another.

5. Filling body (1) according to claim 4, wherein the two other cut edges (10-2, 20-3) of the adjacent cuts (10-1, 20-2) also run parallel to one another.

6. Filling body (1) according to claim 1, wherein both cut edges (10-2, 10-3) of the same cut (10-1) lie in one plane.

7. Filling body (1) according to claim 1, wherein the fibre-reinforced carbon flat material (2) comprises fibres selected from glass fibres, basalt fibres and carbon fibres.

8. Filling body (1) according to claim 1, wherein the fibre-reinforced carbon flat material (2) comprises at least one unidirectional region (BU) in which the fibres do not cross.

9. Filling body (1) according to claim 8, wherein the fibre-reinforced carbon flat material (2) comprises at least two unidirectional strip regions (BU-5, BU-15) adjacent to both cut edges (10-2, 10-3) of the same cut (10-1).

10. Filling body (1) according to claim 8, wherein a unidirectional strip region (BU-15) extends from one cut edge (10-3) of the strip region (15) to the other cut edge (20-2) of the same strip region (15) and from the first cut ends of the two cuts (10-1, 20-1) to the second cut ends of the two cuts (10-1, 20-1).

11. Filling body according to claim 8, wherein the unidirectional region (BU) extends over the entire carbon flat material (2).

12. Filling body (1) for use in unstructured packings, wherein the filling body has a fibre-reinforced carbon flat material (2), and two strip regions (5, 15) of the carbon flat material, which are separated by a cut (10-1), transition into one another in two connecting regions (3, 4) of the carbon flat material, **characterized in that** the fibre-reinforced carbon flat material (2) comprises at least one multidirectional region (BM) in which the fibres cross.

13. Column having an unstructured packing comprising filling bodies according to one of claims 1 to 12.

14. Method for producing a filling body according to one of claims 1 to 12, wherein a fibre-reinforced starting flat material is fed into a press-and-cutting zone, and the starting flat material is shaped, cut up and cut through in the press-and-cutting zone so as to form a body which comprises a fibre-reinforced flat material and in which two strip regions of the flat material separated by a cut transition into one another in two connecting regions of the flat material.

15. Use of filling bodies according to claims 1 to 12 or a column according to claim 13 for the processing of fluids containing sour gas and/or halogen.

## Revendications

1. Corps de remplissage (1) destiné à être utilisé dans des garnitures non structurées, dans lequel le corps de remplissage présente un matériau plat en carbone (2) renforcé de fibres et deux zones formant bandes (5, 15) du matériau plat en carbone séparées par une découpe (10-1) se fondent l'une dans l'autre dans deux zones de liaison (3, 4) du matériau plat en carbone, **caractérisé en ce qu'**au moins une partie des fibres s'étendant dans au moins une zone formant bande (5, 15) s'étend jusque dans les deux zones de liaison (3, 4).

2. Corps de remplissage (1) selon la revendication 1, présentant
n découpes et
n + 1 zones formant bandes,
où n est un nombre choisi parmi 2, 3, 4, 5, 6, 7, 8, 9, 10 ou 11.

3. Corps de remplissage (1) selon la revendication 1, dans lequel la découpe (10-1) définit un premier bord de coupe (10-2) et un second bord de coupe (10-3) qui se fondent l'un dans l'autre à une première et à une seconde extrémité de coupe de la découpe (10-1) et une section d'un bord de coupe (10-2) est espacée de l'autre bord de coupe (10-3) de la même découpe (10-1).

4. Corps de remplissage (1) selon la revendication 1, dans lequel deux bords de coupe (10-3, 20-2) de découpes (10-1, 20-1) voisines délimitent la zone formant bande (15) et les bords de coupe (10-3, 20-2) délimitant la zone formant bande (15) s'étendent de manière à être parallèles entre elles.

5. Corps de remplissage (1) selon la revendication 4, dans lequel les deux autres bords de coupe (10-2, 20-3) des découpes (10-1, 20-2) voisines s'étendent également de manière à être parallèles entre eux.

6. Corps de remplissage (1) selon la revendication 1, dans lequel les deux bords de coupe (10-2, 10-3) de la même découpe (10-1) se trouvent dans un plan.

7. Corps de remplissage (1) selon la revendication 1, dans lequel le matériau plat en carbone (2) renforcé de fibres comprend des fibres sélectionnées parmi fibres de verre, fibres de basalte et fibres de carbone.

8. Corps de remplissage (1) selon la revendication 1, dans lequel le matériau plat en carbone (2) renforcé de fibres comprend au moins une zone unidirectionnelle (BU) dans laquelle les fibres ne se croisent pas.

9. Corps de remplissage (1) selon la revendication 8, dans lequel le matériau plat en carbone (2) renforcé de fibres comprend au moins deux zones formant bandes unidirectionnelles (BU-5, BU-15) qui sont adjacentes aux deux bords de coupe (10-2, 10-3) de la même découpe (10-1).

10. Corps de remplissage (1) selon la revendication 8, dans lequel une zone formant bande unidirectionnelle (BU-15) s'étend d'un bord de coupe (10-3) de la zone formant bande (15) à l'autre bord de coupe (20-2) de la même zone formant bande (15) et des premières extrémités de coupe des deux découpes (10-1, 20-1) aux secondes extrémités de coupe des deux découpes (10-1, 20-1).

11. Corps de remplissage selon la revendication 8, dans lequel la zone unidirectionnelle (BU) s'étend sur l'ensemble du matériau plat en carbone (2).

12. Corps de remplissage (1) destiné à être utilisé dans des garnitures non structurées, dans lequel le corps de remplissage présente un matériau plat en carbone (2) renforcé de fibres et deux zones formant bandes (5, 15) du matériau plat en carbone séparées par une découpe (10-1), se fondent l'une dans l'autre dans deux zones de liaison (3, 4) du matériau plat en carbone,
**caractérisé en ce que** le matériau plat en carbone (2) renforcé de fibres comprend au moins une zone multidirectionnelle (BM) dans laquelle les fibres se croisent.

13. Colonne présentant une garniture non structurée comprenant des corps de remplissage selon l'une des revendications 1 à 12.

14. Procédé pour la fabrication d'un corps de remplissage selon l'une des revendications 1 à 12, dans lequel un matériau plat de départ renforcé de fibres est amené dans une zone de coupe à la presse, et le matériau plat de départ est façonné, coupé et découpé dans la zone de coupe à la presse de sorte qu'un corps est formé, lequel corps présente un matériau plat renforcé de fibres, et dans lequel deux zones formant bandes du matériau plat séparées par une découpe se se fondent l'une dans l'autre dans deux zones de liaison du matériau plat.

15. Utilisation de corps de remplissage selon les revendications 1 à 12 ou d'une colonne selon la revendication 13 pour le traitement de fluides contenant des gaz acides et/ou des halogènes.
